# EUROPÄISCHE PATENTANMELDUNG

(11) **EP 4 234 390 A1**
(43) Veröffentlichungstag der Anmeldung: **30.08.2023**
(21) Anmeldenummer: 22159174.6
(22) Anmeldetag: 28.02.2022
(51) Int. Cl.: B63H 8/18, B63H 9/072

(54) **KITESYSTEM**

(71) Anmelder: SkySails Power GmbH, 20357 Hamburg (DE)
(72) Erfinder: Alves, Benjamin, 20537 Hamburg (DE)
(74) Vertreter: Glawe, Delfs, Moll

(57) **Zusammenfassung**

Kitesystem mit einem Kite (14), einem Leinenbaum (24), einer Gondel (25) und einem Zugseil (15), wobei der Kite (14) über den Leinenbaum (24) an der Gondel (25) angeschlossen ist und wobei das Zugseil (15) sich zwischen der Gondel (25) und einem erdgebundenen Anlenkpunkt (16, 55) erstreckt. Eine im Betrieb von dem Kite (14) ausgeübte Zugkraft wird über einen Zugstrang (15, 24) übertragen wird, der sich von dem Kite (14) über den Leinenbaum (24) und das Zugseil (15) zu dem Anlenkpunkt (16, 55) erstreckt. Innerhalb des Zugstrangs (15, 24) ist eine bei Wasserkontakt auslösende Trennvorrichtung (40) angeordnet. Offenbart ist weiter eine für das Kitesystem geeignete Trennvorrichtung (40).

## Beschreibung

Die Erfindung betrifft ein Kitesystem mit einem Kite, einem Leinenbaum, einer Gondel und einem Zugseil. Der Kite ist über den Leinenbaum an der Gondel angeschlossen. Das Zugseil erstreckt sich zwischen der Gondel und einem erdgebundenen Anlenkpunkt.

Der Kite kann durch geeignete Einstellung der aerodynamischen Eigenschaften entlang von Flugbahnen bewegt werden, die im Wesentlichen senkrecht zu dem Zugseil ausgerichtet sind. Während der Bewegung des Kite entlang der Flugbahnen wird eine Zugkraft auf das Zugseil ausgeübt. Die Zugkraft kann beispielsweise zum Erzeugen elektrischer Energie oder als Antriebskraft für ein Schiff genutzt werden.

Insbesondere bei der Verwendung auf einem Schiff oder bei einer Verwendung im Rahmen der Offshore-Energieerzeugung kann es vorkommen, dass ein Kite ungewollt im Wasser landet. Ein Zugseil, das auf dem Meer zwischen einem Anlenkpunkt und einem Kite gespannt ist, kann eine Gefahr für die Schifffahrt darstellen. Das Einholen und Bergen eines im Wasser treibenden Kite kann erschwert sein, weil das Wasser dem aufgespannten Kite erhebliche Kräfte entgegensetzen kann. Außerdem kann es zu Schäden am Gerät kommen, wenn über das Zugseil hohe Kräfte auf den Anlenkpunkt übertragen werden.

Der Erfindung liegt die Aufgabe zugrunde, ein Kitesystem vorzustellen, so dass die Gefahren im Zusammenhang mit einem ungewollt im Wasser landenden Kite vermindert werden. Ausgehend vom genannten Stand der Technik wird die Aufgabe gelöst mit den Merkmalen des unabhängigen Anspruchs. Vorteilhafte Ausführungsformen sind in den Unteransprüchen angegeben.

Bei dem erfindungsgemäßen Kitesystem wird eine von dem Kite ausgeübte Zugkraft über einen Zugstrang übertragen, der sich von dem Kite über den Leinenbaum und das Zugseil zu dem Anlenkpunkt erstreckt. Innerhalb des Zugstrangs ist eine bei Wasserkontakt auslösende Trennvorrichtung angeordnet. Die Trennvorrichtung ist ein Element des Zugstrangs, über das die zwischen dem Kite und dem Anlenkpunkt wirkenden Zugkräfte vollständig oder teilweise übertragen werden.

Die Erfindung beruht auf dem Gedanken, die von einem im Wasser treibenden Kite ausgehenden Zugkräfte zu reduzieren, indem innerhalb des Zugstrangs ein an der Übertragung der Zugkräfte beteiligtes Strangelement durchtrennt wird. Eine Landung des Kite im Wasser ist ein im Normalbetrieb des Kitesystems nicht vorgesehenes Ereignis, weswegen nicht davon ausgegangen werden kann, dass alle für den Normalbetrieb des Kitesystems vorgesehenen Steuermechanismen noch funktionsfähig sind. Mit der Erfindung wird vorgeschlagen, die Trennvorrichtung so zu gestalten, dass sie durch Wasserkontakt ausgelöst wird. Das Trennen der Verbindung innerhalb des Zugstrangs funktioniert auf diese Weise auch dann noch zuverlässig, wenn andere Steuerungseinrichtungen ausgefallen sind.

Ein Anlenkpunkt ist erdgebunden, wenn er durch die Zugkraft des Kites nicht von der Erdoberfläche abgehoben wird. Ein erdgebundener Anlenkpunkt kann fest mit dem Erdboden verbunden sein. Möglich sind beispielsweise auch erdgebundene Anlenkpunkte auf einem Schiff, auf einem schwimmenden Ponton oder auf einem mobilen System an Land.

Der sich zwischen dem Kite und dem Anlenkpunkt erstreckende Zugstrang kann einen ersten Abschnitt umfassen, in dem die Zugkraft über eine Mehrzahl von zueinander parallelen Strangelementen übertragen wird. Dieser Abschnitt des Zugstrangs kann dem Leinenbaum entsprechen, der sich zwischen dem Kite und der Gondel erstreckt. Die Trennvorrichtung kann innerhalb eines von mehreren zueinander parallelen Strangelementen angeordnet sein. Auch nach dem Auslösen der Trennvorrichtung gibt es bei dieser Ausführungsform über die verbleibenden Strangelemente eine Verbindung zwischen dem Kite und dem Anlenkpunkt, über die Zugkräfte übertragen werden können.

Der Zugstrang kann sich zwischen der Trennvorrichtung und dem Kite in eine Mehrzahl von parallelen Strangelementen verzweigen, so dass es nach dem Auslösen der Trennvorrichtung mehrere Punkte an dem Kite gibt, auf die keine Zugkraft mehr wirkt. Möglich ist auch, dass das Kitesystem eine Mehrzahl von Trennvorrichtungen umfasst, die innerhalb des Zugstrangs parallel zueinander angeordnet sind. Insbesondere ist es möglich, alle Strangelemente des ersten Abschnitts zu trennen, so dass keine Verbindung mehr zum zweiten Abschnitt des Zugstrangs besteht.

Der Zugstrang kann einen zweiten Abschnitt umfassen, in dem die gesamte Zugkraft über ein einzelnes Strangelement übertragen wird. Der zweite Abschnitt des Zugstrangs kann dem Zugseil entsprechen, das sich zwischen der Gondel und dem Anlenkpunkt erstreckt. Das Trennvorrichtung kann innerhalb des zweiten Abschnitts des Zugstrangs angeordnet sein, so dass die Verbindung zwischen dem Kite und dem Anlenkpunkt mit dem Auslösen der Trennvorrichtung vollständig unterbrochen wird.

Eine innerhalb des Zugseils angeordnete Trennvorrichtung kann eine zu der Gondel benachbarte Position haben. Insbesondere kann der Abstand zwischen der Gondel und der Trennvorrichtung kleiner sein als 20 %, vorzugsweise kleiner sein als 10 %, weiter vorzugsweise kleiner sein als 2 % der Länge des Zugseils, wenn das Zugseil vollständig ausgefiert ist. Nach dem Auslösen einer solchen Trennvorrichtung kann das Zugseil ohne großen Widerstand eingeholt werden. Der Kite muss mit einem separaten Vorgang geborgen werden, beispielsweise indem man mit einem Schiff zu dem frei im Wasser treibenden Kite fährt und den Kite an Bord des Schiffes holt.

Wird hingegen der Zugstrang mit dem Auslösen der Trennvorrichtung nur teilweise durchtrennt, so wird die Möglichkeit eröffnet, den Kite zusammen mit dem Zugseil zu dem Anlenkpunkt heranzuholen. Dafür ist es von Vorteil, wenn der Kite durch das Auslösen der Trennvorrichtung in einen Zustand gebracht wird, in dem er sich ohne großen Widerstand durch das Wasser ziehen lässt.

Im Normalbetrieb des Kitesystems ist der Zugstrang so gestaltet, dass der Kite quer zur Zugrichtung eine große Fläche überdeckt. Dies wird erreicht, indem der Leinenbaum an einer Mehrzahl von Punkten an dem Kite angeschlagen ist, die in einer senkrecht zur Zugrichtung ausgerichteten Ebene eine große Fläche aufspannen. Das Kitesystem kann so gestaltet sein, dass die noch an dem Zugstrang angeschlagenen Punkte des Kite eine zur Zugrichtung senkrechte Fläche aufspannen, die noch maximal 50 %, vorzugsweise maximal 20 %, weiter vorzugsweise maximal 10 % der im Normalbetrieb aufgespannten Fläche entspricht.

Der Kite kann sich quer zur Bewegungsrichtung von einem ersten Randabschnitt über einen Zentralabschnitt bis zu einem zweiten Randabschnitt erstrecken. Das Kitesystem kann so gestaltet sein, dass mit dem Auslösen der Trennvorrichtung die sich zu dem ersten Randabschnitt und dem zweiten Randabschnitt erstreckenden Strangelemente durchtrennt werden. Der Zugstrang ist dann nur noch an den zentralen Abschnitt des Kite angeschlossen. Die peripheren Abschnitte können nach hinten ausweichen, wenn der Kite durch das Wasser gezogen wird.

Alternativ kann das Kitesystem so gestaltet sein, dass nach dem Auslösen der Trennvorrichtung nur noch ein Randabschnitt des Kite mit dem Zugstrang verbunden ist, während die zu dem gegenüberliegenden Randabschnitt und die zu einem Zentralabschnitt reichenden Strangelemente durchtrennt sind. Der noch mit dem Zugstrang verbundene Randabschnitt des Kite kann ein in Querrichtung peripherer Abschnitt sein, ein in Längsrichtung vorderer Abschnitt sein oder ein in Längsrichtung hinterer Abschnitt sein. Als Längsrichtung wird die Richtung parallel zur Bewegungsrichtung des Kite bezeichnet, also regelmäßig eine zu dem Tragflächenprofil des Kite parallele Richtung.

Die Trennvorrichtung kann einen Verriegelungsmechanismus umfassen, der einen Wechsel zwischen einem geschlossenen und einem geöffneten Zustand der Trennvorrichtung ermöglicht. Im geschlossenen Zustand kann eine Zugkraft über die in dem Zugstrang angeordnete Trennvorrichtung übertragen werden kann. Im geöffneten Zustand der Trennvorrichtung ist der Zugstrang an dieser Stelle getrennt.

Die Trennvorrichtung kann ein Auslöseelement umfassen, das auf Wasserkontakt reagiert. Das Auslöseelement kann in mechanischem Kontakt mit dem Verriegelungsmechanismus stehen, so dass die Trennvorrichtung im geschlossenen Zustand gehalten wird, solange das Auslöseelement nicht mit Wasser in Kontakt kommt. Beispielsweise kann das Auslöseelement einen Körper aus einem wasserlöslichen Material aufweisen, so dass der Körper sich bei Wasserkontakt auflöst und damit einen Betätigungsweg für den Verriegelungsmechanismus freigibt. Bei dem Körper kann es sich beispielsweise um eine Cellulosetablette oder eine Salztablette handeln. Der Verriegelungsmechanismus kann federbelastet sein, so dass er nach Freigabe des Betätigungswegs selbsttätig in den geöffneten Zustand wechselt.

Möglich ist auch, dass das Auslöseelement als Auslösesensor gestaltet ist, der bei Wasserkontakt ein Steuersignal gibt. Das Steuersignal kann über ein Kabel oder über eine Funkverbindung zu dem Verriegelungsmechanismus übertragen werden. Nach Eingang des Steuersignals kann der Verriegelungsmechanismus betätigt werden, so dass die Trennvorrichtung vom geschlossenen Zustand in den geöffneten Zustand wechselt. Umfasst sind auch Ausführungsformen, bei denen der Verriegelungsmechanismus auf andere Weise betätigt wird, beispielsweise pneumatisch oder hydraulisch.

Die Trennvorrichtung kann so gestaltet sein, dass sie unter Umgehung des Auslöseelements zwischen dem geöffneten und dem geschlossenen Zustand wechseln kann. Insbesondere kann die Trennvorrichtung einen Verriegelungsmechanismus aufweisen, der ohne Auslösen des Auslöseelements betätigt werden kann. Auf diese Weise kann die Trennvorrichtung verwendet werden, um zum Beispiel eine Verbindung zwischen dem Leinenbaum und der Gondel oder zwischen der Gondel und dem Zugseil herzustellen oder zu trennen. Das Auslöseelement kann unverändert erhalten bleiben und seine Funktion, bei Wasserkontakt auszulösen, beibehalten.

Das Betätigungsteil kann federbelastet sein, um die Trennvorrichtung im geschlossenen Zustand zu halten. Die das Betätigungsteil haltende Federkraft kann so bemessen sein, dass sie manuell überwunden werden kann.

In einer Ausführungsform ist die Trennvorrichtung ein Schäkel, der nach Auslösen des Auslöseelements selbsttätig öffnet. Möglich sind alternativ auch Trennvorrichtungen, die dazu ausgelegt sind, den Zugstrang oder einen Teil davon durch mechanische Einwirkung, beispielsweise durch Schneiden zu trennen. In einer Ausführungsform ist die Trennvorrichtung ein Pyrocutter. Auch Trennvorrichtungen, die durch Brennen oder Sprengen auf einen Teil des Zugstrangs einwirken, sind möglich.

Das Auslöseelement kann so eingerichtet sein, dass es nur bei Kontakt mit Salzwasser, nicht aber bei Kontakt mit Süßwasser reagiert. Dies kann von Nutzen sein, wenn der Kite über dem Meer betrieben wird, so dass ein Absturz des Kite Kontakt mit Salzwasser zur Folge hat. Hingegen würde ein Kontakt mit Regenwasser nicht zu einem Auslösen des Auslöseelements führen.

Zusätzlich oder alternativ dazu kann die Trennvorrichtung so gestaltet sein, dass das Auslöseelement vor Regenwasser geschützt ist. Beispielsweise kann das Auslöseelement nach oben hin abgedeckt sein oder nur über einen Kanal von außen zugänglich sein, so dass das Auslöseelement nur nach Eintauchen in Wasser auslöst.

Eine Trennvorrichtung mit ein oder mehreren der genannten Merkmale hat eigenständigen erfinderischen Gehalt, auch ohne dass sie im Zusammenhang eines erfindungsgemäßen Kitesystems verwendet wird.

Das Kitesystem kann auch den erdgebundenen Anlenkpunkt umfassen, zu dem sich das Zugseil erstreckt. Der erdgebundene Anlenkpunkt kann ein Bestandteil einer auf dem Meer schwimmenden Einrichtung, wie beispielsweise eines Schwimmpontons oder eines Schiffs sein. Das Kitesystem kann ein Element einer Vorrichtung zum Erzeugen elektrischer Energie sein. Die Vorrichtung kann einen Generator umfassen, der über eine Zugseilwinde angetrieben wird. Möglich ist auch, dass das Kitesystem mit einem Anlenkpunkt eines Schiffs verbunden ist, sodass mit dem Kitesystem eine Antriebskraft für das Schiff erzeugt werden kann.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine Vorrichtung zum Erzeugen elektrischer Energie mit einem erfindungsgemäßen Kitesystem;
- Fig. 2:: eine schematische Darstellung eines Betriebszustands der Vorrichtung aus Fig. 1;
- Fig. 3-4:: Details des Kitesystems aus Fig. 1 in vergrößerter Darstellung;
- Fig. 5:: ein erfindungsgemäßes Kitesystem;
- Fig. 6:: eine alternative Ausführungsform eines erfindungsgemäßen Kitesystems;
- Fig. 7:: das Kitesystem aus Fig. 6 in einem anderen Zustand;
- Fig. 8:: eine weitere Ausführungsform eines erfindungsgemäßen Kitesystems;
- Fig. 9:: das Kitesystem aus Fig. 8 in einem anderen Zustand
- Fig. 10:: eine Ausführungsform einer Trennvorrichtung eines erfindungsgemäßen Kitesystems;
- Fig. 11:: ein Schiff mit einem erfindungsgemäßen Kitesystem.

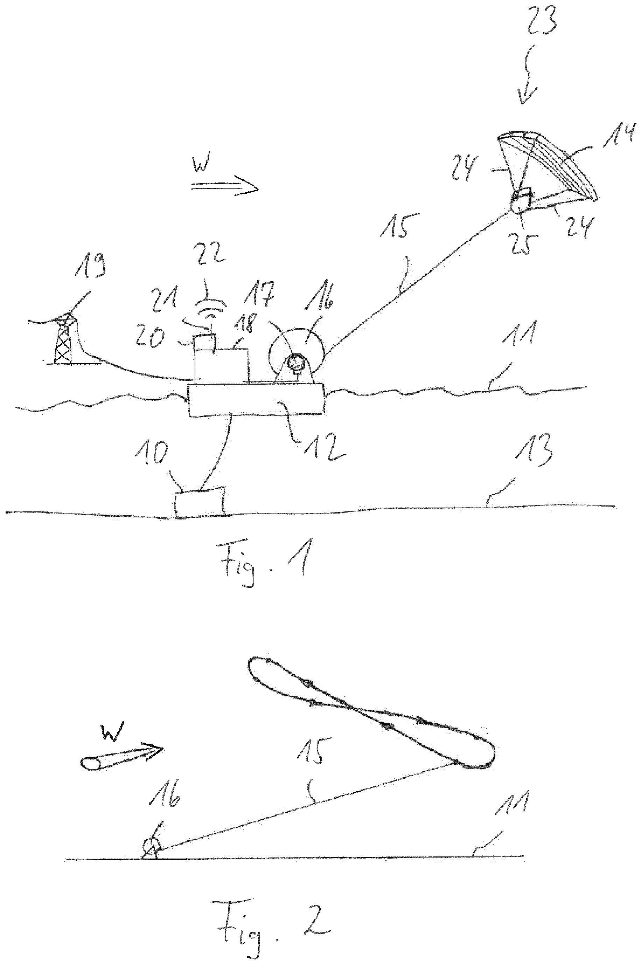

Eine in Fig. 1 gezeigte Vorrichtung zum Erzeugen elektrischer Energie umfasst ein erfindungsgemäßes Kitesystem 23, das über ein Zugseil 15 an eine Zugseilwinde 16 angeschlossen ist. Die Zugseilwinde 16 bildet einen Anlenkpunkt im Sinne der Erfindung. Das Kitesystem 23 umfasst einen Kite 14, der über einen Leinenbaum 24 an eine Gondel 25 angeschlossen ist.

Mit der Zugseilwinde 16 gekoppelt ist eine elektrische Kraftarbeitsmaschine 17, die in einem ersten Betriebszustand als Generator und in einem zweiten Betriebszustand als Motor arbeitet. Die Kraftarbeitsmaschine ist über einen elektrischen Leistungsstrang 18, der einen Umrichter und einen Transformator umfasst, an ein öffentliches Übertragungsnetz 19 angeschlossen, so dass entweder mit der Kraftarbeitsmaschine 17 erzeugte elektrische Energie in das Übertragungsnetz 19 eingespeist werden kann oder die Kraftarbeitsmaschine 17 mit aus dem Übertragungsnetz 19 entnommener elektrische Energie als Motor betrieben werden kann. Die Vorrichtung umfasst eine Steuereinheit 20, die dazu ausgelegt ist, das Zusammenspiel der Komponenten der Vorrichtung zu steuern.

Die Zugseilwinde 16 mit der Kraftarbeitsmaschine 17 und den Komponenten des elektrischen Leitungsstrangs 18 ist auf einem Schwimmponton 12 angeordnet, der auf dem Meer 11 schwimmt. Der Schwimmponton 12 ist mit einer auf dem Meeresgrund 13 liegenden Verankerung 10 verbunden.

Die Steuereinheit 20 umfasst eine Antenne 21, so dass über eine Funkverbindung 22 Steuersignale mit der Gondel 25 ausgetauscht werden können. Insbesondere werden von der Steuereinheit 20 Steuersignale an die Gondel 25 gesendet, um die Flugbahn des Kite 14 zu steuern. Unter Nutzung der Steuersignale wird die Länge von Steuerleinen des Leinenbaums 24 verändert, wodurch Einfluss auf die Flugrichtung des Kite 14 genommen wird.

In dem Ausführungsbeispiel gemäß Fig. 2 wird der Kite 14 entlang einer im Wesentlichen quer zur Windrichtung W ausgerichteten liegenden Acht geführt. Während der Kite 14 der Flugbahn folgt, wird eine Zugkraft auf das Zugseil 15 ausgeübt, mit der über die Zugseilwinde 16 die Kraftarbeitsmaschine 17 angetrieben wird. Mit der in diesem Betriebszustand als Generator betriebenen Kraftarbeitsmaschine 17 wird die mechanische Energie in elektrische Energie umgewandelt und über den Leistungsstrang 18 in das öffentliche Übertragungsnetz 19 eingespeist. Möglich ist auch, einen Teil der erzeugten Energie in elektrischer Form in einem Energiespeicher des Leistungsstrangs 18 zu speichern. Auf diese Weise kann elektrische Energie erzeugt werden, bis die Länge des Zugseils 15 ausgeschöpft ist und das Zugseil 15 vollständig von der Zugseilwinde 16 ausgefiert ist. Anschließend wird das Zugseil 15 mit der als Motor betriebenen Kraftarbeitsmaschine 17 eingeholt, bevor erneut elektrische Energie erzeugt werden kann.

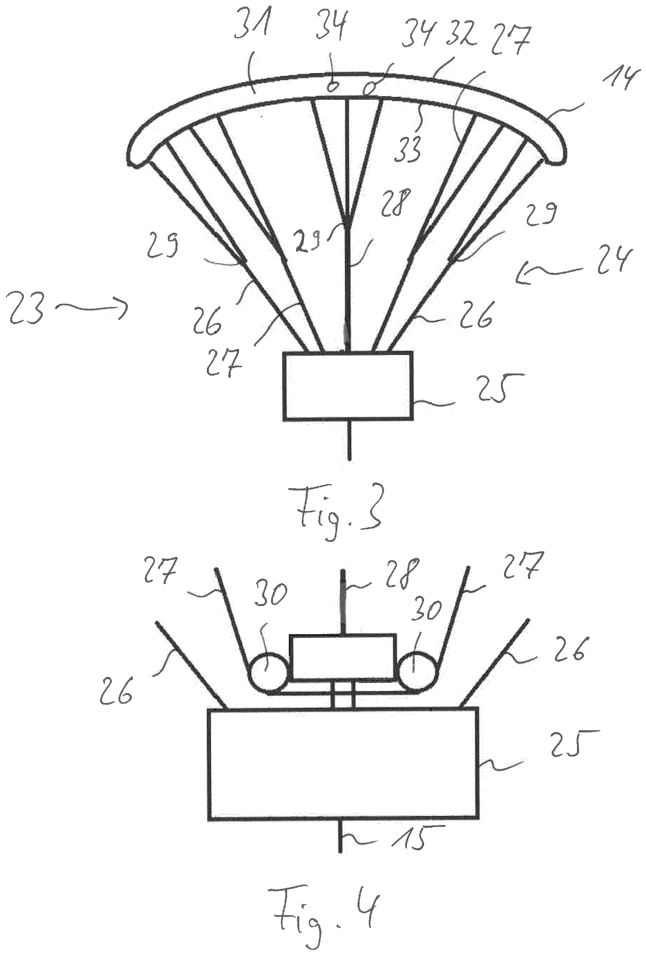

Der Leinenbaum 24 des erfindungsgemäßen Kitesystem 23 umfasst gemäß Fig. 3 aktive Steuerleinen 26, passive Steuerleinen 27 und Festleinen 28, die jeweils an der Gondel 25 angeschlagen sind und die sich ausgehend von Knotenpunkten 29 in eine Mehrzahl von an dem Kite 14 angeschlagene Enden verzweigen. Die Festleinen 28 erstrecken sich von einem in fester Verbindung mit der Gondel 25 stehenden Ende bis zu einem zentralen Abschnitt des Kite 14. Die aktiven Steuerleinen 26, deren Länge einstellbar ist, erstrecken sich von der Gondel 25 bis zu zwei peripheren Abschnitten des Kite 14. Die passiven Steuerleinen 27, die an der Gondel 25 über Rollen 30 umgelenkt sind, sind zwischen den Festleinen 28 und den aktiven Steuerleinen 26 an dem Kite 14 befestigt.

Durch Einstellen der Länge der aktiven Steuerleinen 26 kann die Bewegungsrichtung des Kite 14 gesteuert werden. Beim Einstellen der aktiven Steuerleinen 26 werden die passiven Steuerleinen 27 über die Rollen 30 mitgeführt, wobei die Länge der passiven Steuerleinen 27 vom Kite 14 über die Rollen 30 zurück zum Kite 14 unverändert bleibt.

Der Kite 14 bildet ein Tragflächenprofil, das sich in Längsrichtung ausgehend von einer in Fig. 3 sichtbaren Stirnfläche 31 über eine Außenfläche 32 und eine Innenfläche 33 bis zu einem in Fig. 3 nicht sichtbaren hinteren Ende erstreckt. Im Inneren des Kite 14 ist ein Hohlraum ausgebildet, der im Normalbetrieb des Kitesystems unter Überdruck steht. Der Kite 14 umfasst in der Stirnfläche 31 ausgebildete Öffnungen 34, durch die Luft in den Innenraum eintreten kann und durch die der Überdruck aufgebaut wird, wenn der Kite 14 in Bewegung ist.

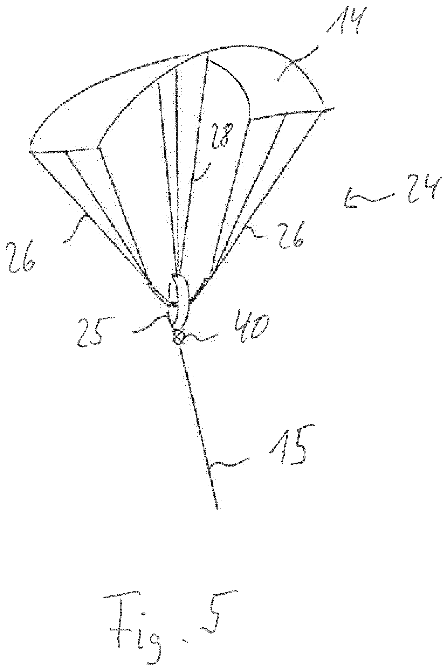

Gemäß Fig. 5 ist die Gondel 25 über eine Trennvorrichtung 40 an das Zugseil 15 angeschlagen. Die Trennvorrichtung 40 löst bei Wasserkontakt 40 aus und trennt die Verbindung zwischen der Gondel 25 und dem Zugseil 15. Fällt der Kite 14 in Folge einer außergewöhnlichen Betriebssituation ins Meer 11, so kommt die Trennvorrichtung 40 in Kontakt mit dem Meerwasser und die Verbindung zwischen der Gondel 25 und dem Zugseil 15 wird gelöst. Das Zugseil 15 kann mit der Zugseilwinde 16 eingeholt werden, ohne dass größere Kräfte aufgebracht werden müssen. Dies hat den Vorteil, dass eine Gefahr für den Schiffsverkehr, die aus dem zwischen der Zugseilwinde 16 und der Gondel 25 gespannten Zugseil 15 resultieren kann, zügig beseitigt werden kann. Der Kite 14 und die Gondel 15 treiben nach dem Auslösen der Trennvorrichtung 40 frei auf dem Meer und können mit einem Schiff geborgen werden.

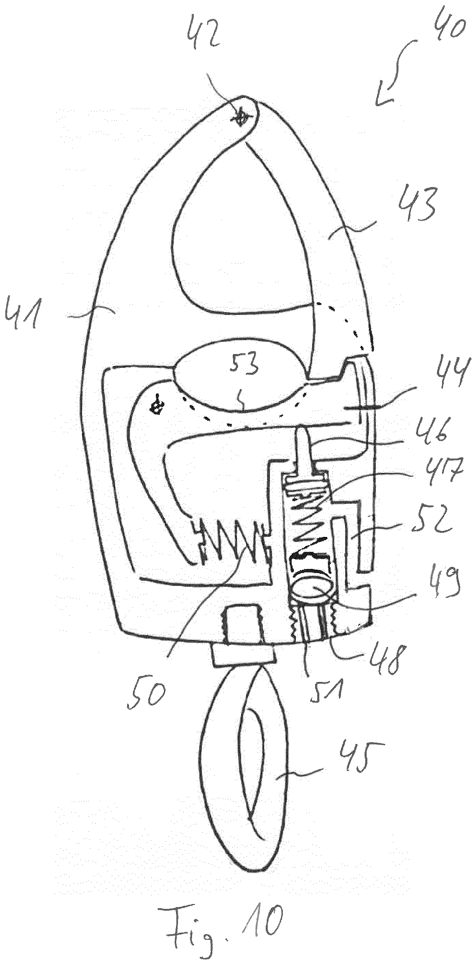

In Fig. 10 ist eine Ausführungsform einer erfindungsgemäßen Trennvorrichtung 40 in Form eines Schäkels gezeigt. Der Schäkel umfasst einen als Gussteil ausgebildeten Schäkelkörper 41. An einem vorderen Ende des Schäkelkörpers 41 ist über eine Gelenkverbindung 42 ein Verschlussstück 43 angeschlagen, dass über einen Riegel 44 in dem in Fig. 10 gezeigten geschlossenen Zustand gehalten wird. Am gegenüberliegenden hinteren Ende des Schäkels ist eine Öse 45 in den Schäkelkörper 41 eingeschraubt. Im Betrieb des Kitesystems 23 aus Fig. 5 ist das Zugseil 15 mit der Öse 45 verbunden und das vordere Ende des Schäkels ist an der Gondel 25 angeschlagen.

Der Schäkel umfasst ein Halteelement 46, durch das der Riegel 44 im geschlossenen Zustand gehalten wird. Das Halteelement 46 ist in einer Bohrung des Schäkelkörpers 41 angeordnet und wird durch eine Haltefeder 47 in dem in Fig. 10 gezeigten vorderen Zustand gehalten. Die Bohrung ist mit einem Stopfen 48 verschlossen. Die Haltefeder 47 stützt sich über eine Cellulosetablette 49 am vorderen Ende des Stopfens 48 ab.

Fällt der Schäkel ins Meer 11, so kommt die Cellulosetablette 49 in Kontakt mit Meerwasser und löst sich auf. Das Halteelement 46 wird nicht mehr an dem Stopfen 48 abgestützt und gibt damit einen Bewegungsraum für den Riegel 44 frei. Der Riegel 44 wird durch die Kraft einer im Normalzustand unter Spannung stehenden Riegelfeder 50 gelöst. Das Verschlussstück 43 öffnet sich und die Gondel 25 wird vom Zugseil 15 getrennt.

Der Raum, in dem die Cellulosetablette 49 angeordnet ist, ist durch einen in dem Stopfen 48 ausgebildeten ersten Kanal 51 und durch einen in dem Verschlusskörper 41 ausgebildeten zweiten Kanal 52 mit der Umgebung verbunden. Das Meerwasser kann durch einen der Kanäle eintreten, während die Luft durch den anderen Kanal entweichen kann. Ein Einschluss von Luftblasen wird vermieden. Die Kanäle 51, 52 sind so gestaltet und ausgerichtet, dass im Normalbetrieb des Kitesystems 23 kein Regenwasser zu der Cellulosetablette 49 vordringen kann. Nur nach Eintauchen des Schäkels in Wasser löst sich die Cellulosetablette 49 auf.

Der Schäkel kann auch ohne Auflösen der Cellulosetablette 49 geöffnet werden, indem eine Bedienperson über eine Grifffläche 53 Druck auf den Riegel 44 ausübt. Die Haltefeder 47 ist so dimensioniert, dass sie mit Handkraft komprimiert werden kann.

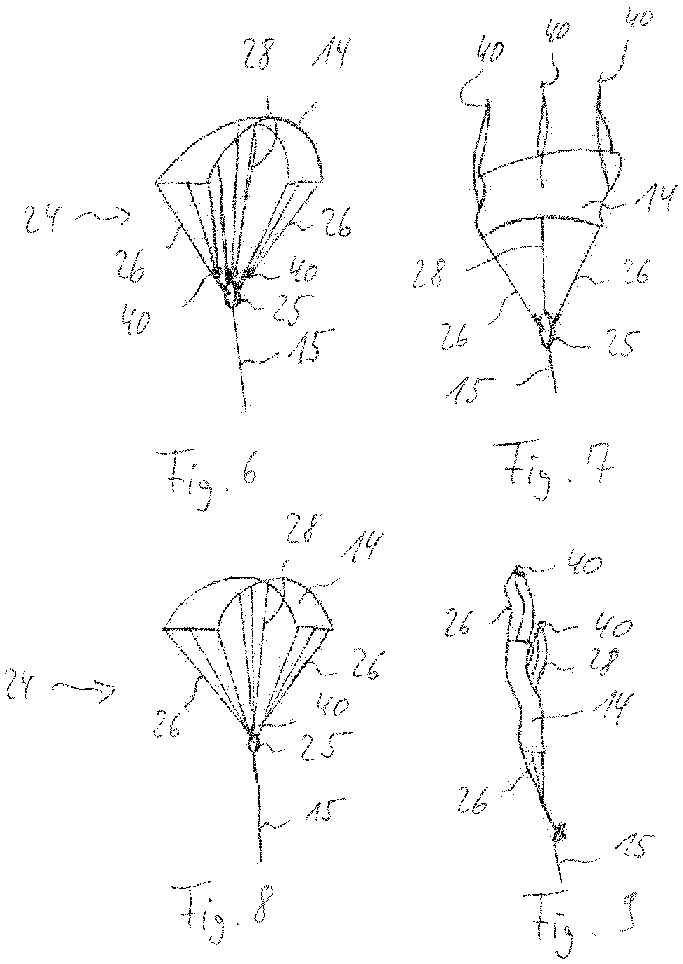

In Fig. 6 hat der vereinfacht dargstellte Leinenbaum 24 drei Festleinen 28, die sich zu einem zentralen Abschnitt des Kite 14 erstrecken, sowie jeweils drei Steuerleinen 26, die sich zu gegenüberliegenden Randabschnitten des Kite 14 erstrecken. Das Kitesystem umfasst insgesamt drei Trennvorrichtungen 40, wobei über die erste Trennvorrichtung 40 zwei der drei Festleinen 28 an die Gondel 25 angeschlagen sind, und wobei über die zweite und dritte Trennvorrichtung 40 jeweils zwei der drei Steuerleinen 26 an die Gondel angeschlagen sind. Fällt der Kite 14 ins Meer 11, so lösen die drei Trennvorrichtungen 40 aus, so dass nur noch eine der Festleinen 28 sowie jeweils nur noch eine der Steuerleinen 26 mit der Gondel 25 verbunden ist. Die Verbindung besteht zu einem vorderen Abschnitt des Tragflächenprofils des Kite 14, der hintere Teil des Kite 14 kann nach hinten ausschwenken: In diesem Zustand bildet der Kite 14 eine flache Struktur, die mit dem Zugseil 15 eingeholt werden kann, ohne dass große Kräfte ausgeübt werden müssen, siehe Fig. 7.

In den Fig. 8 und 9 ist eine alternative Ausführungsform gezeigt, bei der in dem vereinfacht dargestellten Leinenbaum 24 zwei Trennvorrichtungen 40 angeordnet sind. Die erste Trennvorrichtung 40 trennt alle drei Festleinen 28 von der Gondel 25. Die zweite Trennvorrichtung trennt den auf einer Seite der Festleinen 28 angeordneten Satz von Steuerleinen 26 vollständig von der Gondel, so dass der Kite 14 nur noch über den anderen Satz von Steuerleinen 26 mit der Gondel 25 verbunden ist. Nach dem Auslösen der Trennvorrichtungen 40 bildet sich ebenfalls eine flache Struktur, die ohne großen Kraftaufwand durch das Wasser gezogen werden kann und mit dem Zugseil 15 eingeholt werden kann, siehe Fig. 9.

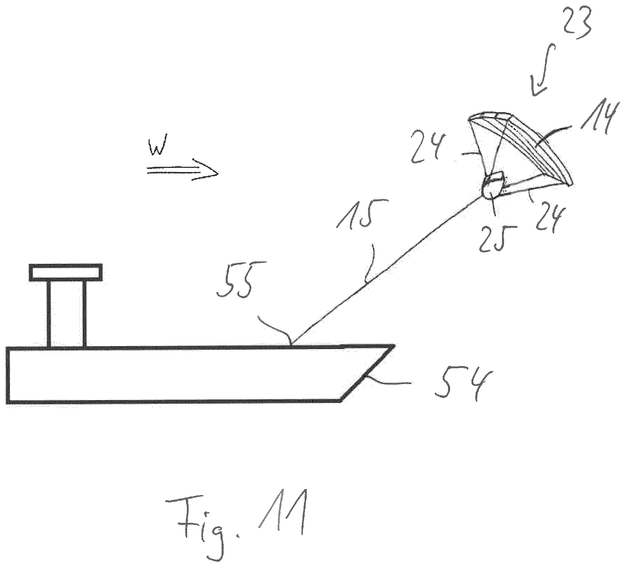

In Fig. 11 ist eine alternative Ausführungsform der Erfindung gezeigt, bei der das erfindungsgemäße Kitesystem 23 genutzt wird, um eine Antriebskraft für ein Schiff 54 zu erzeugen. Das Zugseil 15 ist an einem Anlenkpunkt 55 des Schiffs 54 angeschlagen.

## Patentansprüche

1. Kitesystem mit einem Kite (14), einem Leinenbaum (24), einer Gondel (25) und einem Zugseil (15), wobei der Kite (14) über den Leinenbaum (24) an der Gondel (25) angeschlossen ist und wobei das Zugseil (15) sich zwischen der Gondel (25) und einem erdgebundenen Anlenkpunkt (16, 55) erstreckt und wobei eine im Betrieb von dem Kite (14) ausgeübte Zugkraft über einen Zugstrang (15, 24) übertragen wird, der sich von dem Kite (14) über den Leinenbaum (24) und das Zugseil (15) zu dem Anlenkpunkt (16, 55) erstreckt, wobei innerhalb des Zugstrangs (15, 24) eine bei Wasserkontakt auslösende Trennvorrichtung (40) angeordnet ist.

2. Kitesystem nach Anspruch 1, **dadurch gekennzeichnet, dass** der Zugstrang (15, 24) mit dem Auslösen der Trennvorrichtung (40) vollständig durchtrennt wird.

3. Kitesystem nach Anspruch 1 oder 2, **dadurch gekennzeichnet, dass** der Zugstrang (15, 24) einen Abschnitt umfasst, in dem die Zugkraft über eine Mehrzahl von zueinander parallelen Strangelementen (26, 27, 28) übertragen wird.

4. Kitesystem nach Anspruch 3, **dadurch gekennzeichnet, dass** die Trennvorrichtung (40) innerhalb eines von mehreren zueinander parallelen Strangelementen (26, 27, 28) angeordnet ist.

5. Kitesystem nach Anspruch 3 oder 4, **gekennzeichnet durch** eine Mehrzahl von Trennvorrichtungen (40), die innerhalb des Zugstrangs (15, 24) parallel zueinander angeordnet sind.

6. Kitesystem nach einem der Ansprüche 3 bis 5, **dadurch gekennzeichnet, dass** der Zugstrang (15, 24) mit dem Auslösen der Trennvorrichtung (40) teilweise durchtrennt wird

7. Kitesystem nach Anspruch 6, **dadurch gekennzeichnet, dass** die nach dem Auslösen der Trennvorrichtung (40) an dem Zugstrang angeschlagenen Punkte des Kite (14) eine zur Zugrichtung senkrechte Fläche aufspannen, die noch maximal 50 %, vorzugsweise maximal 20 %, weiter vorzugsweise maximal 10 % der im Normalbetrieb aufgespannten Fläche entspricht.

8. Kitesystem nach einem der Ansprüche 1 bis 3, **dadurch gekennzeichnet, dass** der Zugstrang (15, 24) einen Abschnitt umfasst, in dem die gesamte Zugkraft über ein einzelnes Strangelement (15) übertragen wird und dass die Trennvorrichtung (40) innerhalb des einzelnen Strangelement (15) angeordnet ist.

9. Kitesystem nach einem der Ansprüche 1 bis 8, **dadurch gekennzeichnet, dass** die Trennvorrichtung (40) ein Auslöseelement (49) umfasst, das sich bei Wasserkontakt auflöst.

10. Kitesystem nach nach einem der Ansprüche 1 bis 9, **dadurch gekennzeichnet, dass** das Auslöseelement (49) nur bei Kontakt mit Salzwasser auslöst.

11. Kitesystem nach Anspruch 9 oder 10, **dadurch gekennzeichnet, dass** das Auslöseelement (49) vor Kontakt mit Regenwasser geschützt ist.

12. Kitesystem nach einem der Ansprüche 9 bis 11, **dadurch gekennzeichnet, dass** das Auslöseelement (49) in einem mechanischen Kontakt mit einem Verriegelungsmechanismus (44) der Trennvorrichtung (40) steht.

13. Kitesystem nach einem der Ansprüche 9 bis 12, **dadurch gekennzeichnet, dass** die Trennvorrichtung (40) einen Verriegelungsmechanismus aufweist, der ohne Auslösen des Auslöseelements (49) betätigt werden kann.
